# EUROPEAN PATENT APPLICATION

(11) **EP 2 134 056 A1**
(43) Date of publication of application: **16.12.2009**
(21) Application number: 08104350.7
(22) Date of filing: 10.06.2008
(51) Int. Cl.: H04L 29/06

(54) **Device and method for automatically and remotely managing execution of user application(s)**

(71) Applicant: Alcatel Lucent, 75008 Paris (FR)
(72) Inventor: Conte, Alberto, 94230, CACHAN (FR); Chakri, Al Mahdi, 75015, PARIS (FR)
(74) Representative: El Manouni, Josiane

(57) **Abstract**

A device (D1) is intended for managing execution of application(s) of user(s) having at least one communication equipment connectable to a communication network. This device (D1) comprises i) at least one application agent (AA11-AA13) arranged for hosting and executing at least one chosen application of a user, and for delivering results of this application execution, ii) an access means (AM) arranged for retrieving, receiving or delivering information and/or application results near, from or to other chosen application(s) and/or chosen communication equipment(s), and iii) a managing means (MM) arranged for providing task information relative to the application execution and/or retrieved or received information and/or results to the application agent(s) (AA11-AA13), for hiding the current state of each communication equipment of this user to other applications and communication equipments for allowing them to collaborate with the user application whatever the current state(s), and for triggering retrieve and delivery by the access means (AM) at chosen instants.

## Description

The present invention relates to execution of applications of users comprising communication equipments which can be coupled to a communication network.

An application hosted in a fixed or wireless communication equipment of a user may sometimes require a long-duration execution, possibly in parallel with one or more other applications. It can be the case of applications such as audio and/or video streaming, (instant) messaging, peer-to-peer (or p2p) or personal content publishing, for instance.

But these requirements may be incompatible with the communication equipment technical characteristics (notably in terms of power consumption, (cache) storing capacity and processing capacity) and/or the available resources (notably the bandwidth (in both downlink and uplink directions)) on the link between the communication equipment and its communication network. In other words, the capability to execute bandwidth-greedy always-on applications, possibly in parallel, collides with the intrinsic limitations of a communication equipment and of its access network, notably when it is of a wireless type. Indeed, wireless communication equipments, such as mobile (or cellular) telephones or personal digital assistants (or PDAs), consume power stored into a low capacity battery, while in the same time radio resources of a wireless access network are not only scarce but also shared.

So, accessing a shared and limited medium requires to optimize its usage, in order to avoid the waste of unnecessary resource and/or power that can be made available to other users and/or applications. At least two usage optimizations have been proposed.

A first usage optimization consists in reducing the power consumption of wireless communication equipments by power management and idle mode techniques. These techniques allow to reduce power consumption only when wireless communication equipments are inactive, i.e. when no data is transmitted or received over the air interface.

When in idle mode, a wireless communication equipment switches to a low-consumption state during which it only "listens" to some sort of paging beacon. If traffic, destined to the user, arrives then the network wakes-up the wireless communication equipment by means of a paging procedure. It is recall that in the basic case any traffic addressed to a wireless communication equipment in idle mode triggers paging while in case of IEEE 802.16 standard there is a more refined solution which introduces the notion of selective paging per service flow (SF) (i.e. a voice call may trigger paging but an internet message cannot).

This first usage optimization shows several drawbacks:
- current power saving techniques do not represent an acceptable solution as they reduce battery consumption by putting the communication equipment into a sleep or idle mode which suspend its activity. For instance, a file sharing, which often requires several hours to complete, cannot be performed using current wireless communication equipments unless they are plugged into a power line;
- even when idle mode can be used, some applications may generate random and frequent update messages (this is notably the case of the "buddy-list-state_update" generated by pesence based applications like instant messaging (or IM) or push-mail) which cause the terminal to wake-up frequently, thus consuming its battery;
- state of art paging strategies (for instance the one defined by the IEEE 802.16 standard with service flow granulairty) provide only a page versus no-page choice, and are currently access technology dependent.

A second usage optimization consists in executing remotely in the network some applications. This consists in executing completely a selected application (for instance a peer-to-peer file sharing) in some remote server in the network, usually via proxies, and in storing remotely the application results. The user accesses these application results by means of an explicit request as if he had to access a remote disk.

This second usage optimization shows several drawbacks:
- there is no automatic delivery of the application results to the concerned communication equipment, and in particular there is no delivery strategy able to take into account and to optimize the battery consumption of this communication equipment;
- it does not work for some applications such as instant messaging and push-mail;
- it is unable to filter incoming downlink traffic in order to select best handling (immediate delivery, discard, late delivery, for instance);
- it requires users with a high level of knowledge in network services, i.e. at least able to find and select the right server operator, to manage subscription and billing, and to configure IP addresses and ports (and potential firewall redirections).

So the object of this invention is to improve the situation.

For this purpose, the invention provides a device, intended for managing execution of application(s) of user(s) having at least one communication equipment connectable to a communication network, and comprising:
- at least one application agent arranged for hosting and executing at least one chosen application of a user, and for delivering results of this application execution,
- an access means arranged for retrieving, receiving or delivering information and/or application results near, from or to other chosen application(s) and/or chosen communication equipment(s), and
- a managing means arranged for providing task information relative to this application execution and/or retrieved or received information and/or results to the application agent(s), for hiding the current state of each communication equipment of this user to other applications and communication equipments for allowing them to collaborate with this user application whatever the current state(s), and for triggering retrieve and delivery by the access means at chosen instants.

The device according to the invention may include additional characteristics considered separately or combined, and notably:
- its access means may be arranged for collecting information representative of the current state of at least one communication equipment of the user and/or triggering wake-up events of a chosen communication equipment of the user;
- its access means may be arranged for collecting information representative of radio conditions for a chosen wireless communication equipment of the user and/or for collecting information representative of a current cache storing capacity of a chosen communication equipment of this user;
   ➢ its managing means may be arranged for triggering the retrieve and delivery by its access means at chosen instants according to the collected radio condition information and/or cache storing capacity information;
- it may comprise a storing means arranged for storing files, each comprising either a content coming from a communication equipment of the user or a result of an application execution by the application agent;
   ➢ she storing means may be arranged for storing at least one of the files in correspondence with an indication on its optimal delivery by the access means;
- it may comprise a checking means arranged for checking integrity and/or legality and/or safeness of the information and/or results to be delivered.

The invention also provides a method, intended for managing execution of at least one application of a user having at least one communication equipment connectable to a communication network, and consisting:
i) in hosting a chosen application of a user into this communication network,
ii) in executing this chosen application to get results, based on task information and possibly according to information and/or application results retrieved near or received from other chosen application(s) and/or chosen communication equipment(s), and while hiding the current state of each communication equipment of the user to other applications and communication equipments for allowing them to collaborate with this user application whatever the current state(s), and
iii) in delivering information and/or results of this executed application to other chosen application(s) and/or chosen communication equipment(s) at chosen instants.

The method according to the invention may include additional characteristics considered separately or combined, and notably :
- in ii) one may collect information representative of the current state of at least one communication equipment of the user, and/or in ii) and/or iii) one may trigger wake-up events of a chosen communication equipment of the user;
- in ii) one may collect information representative of radio conditions for a chosen wireless communication equipment of the user and/or information representative of a current cache storing capacity of a chosen communication equipment of the user, in order to choose the instants for retrieving and delivering information and/or application results;
- in ii) one may store files comprising either a content coming from a communication equipment of the user or a result of an executed application;
   ➢ one may store at least one of the files in correspondence with an indication on its optimal delivery;
- in iii) one may check integrity and/or legality and/or safeness of the information and/or results to be delivered.

Other features and advantages of the invention will become apparent on examining the detailed specifications hereafter and the appended drawings, wherein:
- figure 1 schematically illustrates an example of core network comprising three devices according to the invention and connected to two access networks of different types, and
- figure 2 schematically illustrates an example of embodiment of a device according to the invention.

The appended drawings may serve not only to complete the invention, but also to contribute to its definition, if need be.

The invention aims at offering a device (Di), and an associated method, intended for managing execution of user application(s) in a communication network.

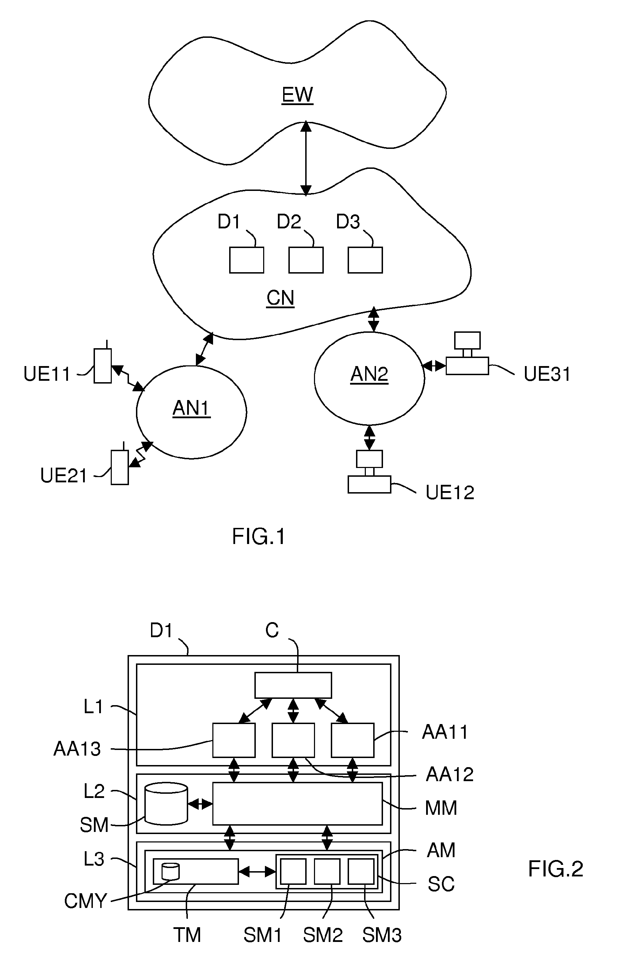

In the following description, and as illustrated in figure 1, it will be considered that the communication network comprises a core network CN connected to a first access network AN1 of a wireless type (for instance UMTS, LTE ("Long Term Evolution") or WiMAX) and to a second access network AN2 of a wire type (for instance DSL ("Digital Subscriber Line")). But the invention is not limited to this kind of communication network. Indeed, it concerns any type of communication network, whatever the type.

An access network is a part of a communication network to which may be connected communication equipments UEij of users.

It is important to note that a user may comprise several (at least two) communication equipments of different types. This is notably the case of the first user (i=1) in the non limiting example of figure 1. More precisely, in figure 1, the first user (i=1) comprises a wireless communication equipment UE11 (j=1), which is connected to the first (wireless) access network AN1, and a second (fixed) communication equipment UE12 (j=2), which is connected to the second (wire) access network AN2, a second user (i=2) comprises a wireless communication equipment UE21 (j=1), which is connected to the first (wireless) access network AN1, and a third user (i=3) comprises a fixed communication equipment UE31 (j=1), which is connected to the second (wire) access network AN2.

A device Di according to the invention is preferably dedicated to one and only one user, and is in charge of managing at least one application of this user. Moreover several devices Di may be dedicated to the same user if they are managing different applications of this user. But a device Di could be in charge of managing execution of applications of several users, possibly in parallel.

These user applications are preferably those who are bandwidth-greedy and/or are generating long-duration sessions (such as audio and/or video streaming, web server, peer-to-peer (or p2p)). But it may be any type of user application.

It is important to note that a device Di according to the invention comprises functional modules which may be either localized into a single network equipment or element or distributed in at least two network equipments or elements of different types (for instance belonging to the core network and to an access network).

This device Di is preferably made of software modules, at least partly. But it could be also made of electronic circuit(s) or hardware modules, or a combination of hardware and software modules (in this case the device Di comprises also a software interface allowing interworking between the hardware and software modules). In case where it is made of software modules it can be stored in a memory of an electronic equipment or element or in any computer software product, such as a CD-ROM, for instance.

As it is schematically illustrated in figure 2, a device Di according to the invention comprises at least one application agent AAik and at least an access module AM and a managing module MM.

Each application agent AAik is arranged for hosting and executing at least one chosen application of a user (and preferably only one), and for delivering results of each execution of its hosted application.

In the non limiting illustrated example device D1 is dedicated to the first user and manages three different applications of this first user. So, it comprises three (k = 1 to 3) application agents AA11 to AA13.

Each application agent AAik is a kind of virtual agent able to naturally interface with the "external world" EW, i.e. with service applications, remote peers, buddies and customers, for instance.

The access module AM is arranged i) for retrieving information and/or application results near chosen application(s) and/or chosen communication equipment(s), ii) for receiving information and/or application results from application(s) and/or communication equipment(s), and iii) for delivering information and/or application results to other chosen application(s) and/or chosen communication equipment(s), possibly belonging to the "external world" EW.

As illustrated in the non limiting example of figure 2, the access module AM may comprise a transfer module TM in charge of the above mentioned retrieve, reception and delivery of results (data, content) and information. Such a transfer module TM preferably comprises, as illustrated, a cache storing means CMY.

The managing module MM is arranged for providing task information relative to the execution of an application (hosted and executed by an application agent AAik) and/or information and/or results that has/have been retrieved or received by the access module AM to the concerned application agent AAik. One means here by "task information" any useful information about a task (or operation) to be carried out. So, it can be an information relative to a priority, or an information indicating a real-time process or a non real-time process, or else a time information defining the end of a download.

For this purpose, it offers APIs ("Application Programming Interfaces") to the application agents AAik to provide useful information about their tasks.

The managing module MM is also arranged for hiding the current state (or status) of each communication equipment UEij of the user to other applications and communication equipments (possibly of a communication network) in order to allow them to collaborate with a user application whatever the current state(s).

Thanks to the above mentioned APIs the managing module MM is able to decide when a content is ready for delivery and when information or results must be retrieved, and then to trigger the access module AM in order it performs this delivery or retrieve at chosen instants. So, the managing module MM decide when, how and to whom a content or information must be delivered.

A device Di is a new service-aware network element in charge of representing a user (its application(s), data and presence) in a stable and permanent way. So, it constitutes a "network-hosted avatar" helping operators to satisfy the expectations of their customers.

In order to ensure an optimal and efficient uplink/downlink transfer (retrieve and delivery) of contents and information to an end-user, the device Di may take into account the current state of each communication equipment UEij of its user and/or radio conditions of a chosen wireless communication equipment UEij of this user and/or the cache storing capacity of a chosen communication equipment UEij of this user.

For this purpose, and as illustrated in the non limiting example of figure 2, its access module AM may comprise a collection module SC, which is preferably coupled to its transfer module TM.

More precisely, the collection module SC may comprise at least one of the three sub-modules SM1 to SM3 described below.

The first sub-module SM1 is arranged for collecting information which is representative of the current state (or status) of at least one communication equipment UEij of the user and/or triggering wake-up events of a chosen communication equipment UEij of this user. It receives its collection instructions from the managing module MM. It is recall that a communication equipment may be usually set in one of three different states: active, idle and off.

The second sub-module SM2 is arranged for collecting information representative of radio conditions for a chosen wireless communication equipment UEij of its user. It receives its collection instructions from the managing module MM. One means here by "radio conditions" any information representative of the radio environment of a wireless communication equipment UEij. So, it may be the radio coverage or the available bandwidth, for instance.

The third sub-module SM3 is arranged for collecting information representative of a current (or available) cache storing capacity of a chosen communication equipment UEij of its user. It receives its collection instructions from the managing module MM.

Information collected by the collection module SC is provided to the managing module MM, which takes it into account for determining the chosen instants for retrieving and delivering information and/or application results near or to chosen application(s) and/or chosen communication equipment(s) and triggering the access module AM consequently.

With such an arrangement the access module AM defines an optimal and efficient uplink/downlink delivery system which is preferably based on caching architecture and protocols enabling discontinuous data-burst transfer at very high rate. Caches in the device Di and in a user communication equipment UEij allow for a smart packet scheduling policy offering optimal radio resource usage, by concentrating on data delivery to users with access to good radio conditions.

So, the device (or network-hosted avatar) Di, according to the invention, enables time-unlimited sessions while optimizing the usage of access network resources and reducing the communication equipment power-consumption (i.e. longer battery life, and environment-friendly solution).

The following example illustrates a non limiting example of usage of a device Di dedicated to a women named Alice. In this example Alice is the first user of figure 1. So she has a wireless communication equipment UE11 (for instance a PDA) connected to the first access network AN1 and an office personal computer UE12 connected to the second access network AN2. For instance Alice has to take the train for a 3 hours travel in the evening. So, in the morning, she uses her office personal computer UE12 to request her device D1 to start a p2p-based download in order to get a chosen movie. She also indicates that this chosen movie must be copied to her PDA UE11. The p2p download is taken in charge by her device D1, and remotely executed during several hours. When download is completed, the device D1 silently page Alice's PDA UE11 to start an optimized and fast download delivery. Then, once seated in the train, Alice can comfortably enjoy her chosen movie stored on her PDA UE11.

As illustrated in the non limiting example of figure 2, a device Di may also comprise a storing means SM arranged for storing files comprising either a content coming from a communication equipment UEij of its user or the result of the execution of an application by the corresponding application agent AAik (for instance a content downloaded from a content server or from other peers (in p2p)). For instance this storing means SM can be a memory. But it could be also a database or a hard disk, and more generally any type of means intended for storing data.

At least one of these files may be stored into the storing means SM in correspondence with an indication on its optimal delivery by the access module AM (and more precisely its transfer module TM). It is the management module MM which is in charge of determining these indications and of associating them to the concerned contents before transmitting them to the storing means SM.

The storing means SM defines a storage space which is easily accessible as a remote disk via a virtual personal file system. Thanks to it, the management module MM may synchronize the delivery of locally stored data (contents) to end-users (not only its own user), especially in case where multiple users are sharing the same data, and solve consistency conflict.

Moreover, and as illustrated in the non limiting example of figure 2, a device Di may also comprise a checking module CM arranged for checking integrity (for instance infection by a virus or the like) and/or legality (for instance distribution rights) and/or safeness (for instance parental control) of information and/or results to be delivered to a user. That allows operators to protect themselves against illegal actions, and offers to final users a legal, secure, and safe environment.

As illustrated in the non limiting example of figure 2, the functional modules of a device Di may be shared into three layers.

A first (and upper) layer L1, which can be called "application layer", is in charge of interfacing with the external world EW. It comprises the application agent(s) AAik and the possible checking module CM.

A second (and intermediate) layer L2, which can be called "management (or core) layer", is in charge of managing execution of each hosted application, determining the chosen instants for retrieving and delivering results and information, and possibly storing the results of the executed application(s). It comprises the management module MM and the possible storing means SM.

A third (and lower) layer L3, which can be called "access layer", is in charge of retrieve, reception and delivery of results (data, content) and information. It comprises the access module AM.

It is important to note that a device Di may also interface with paging controller and radio resource management of its communication network, in order to offer additional functionalities such as an application-adapted paging (for instance by triggering paging for a real message, but not for a keep-alive message) or an intelligent presence indicator (for instance by interacting with presence servers when a communication equipment UEij of its user is in idle mode, to show that its user is present).

So, a device (or network-hosted avatar) Di provides a complete and integrated solution to operators needs:
- an application support including virtual agents (for instance in case of p2p or push mail application), protocol and signalling mediation (for instance for SMS-IM), and security suites (for instance parental control, legal check and antivirus);
- storage and publishing facilities by offering means for personal web-site hosting, generic content publishing (for instance small video productions), and all-purposes storing (for instance remote disk), accessible from any communication equipment, anywhere and at anytime;
- permanent availability by providing intelligent presence, service-aware paging (for instance for push mail), and session-while-idle capabilities;
- network resource optimizations by including mechanisms for reliable uplink and downlink delivery with optimal radio resource usage.

As mentioned before a device Di according to the invention may be located in different network elements or equipments or in different application or service platforms.

For instance it may be located (at least partly) into a service platform coupled to or belonging to the communication network. This offers several advantages, and notably an optimization of the platform services, an easy integration (for instance application layer signalling), a straightforward support of non-standard (proprietary) applications and options, independence with respect to mobility, and an increased stability with respect to IP address/context.

It may be also located (at least partly) into an anchor point of the core network CN (for instance a mobile IP home agent). This offers several advantages, and notably independence with respect to mobility, an increased stability with respect to IP address/context, an easier ubiquitous access, and an interface with external world EW.

It may be also located (at least partly) into a base station of a wireless access network AN1. This offers several advantages, and notably a direct access to network/communication equipment information (such as communication equipment status (or state) and radio conditions, and a distributed solution close to the user.

It may be also located (at least partly) into a home gateway. This offers several advantages, and notably a low impact on network infrastructure, an easier adoption by the users, and a smooth integration into so-called DSL modems or "femto base stations".

As mentioned before, the functional modules of a device Di may be distributed into several equipments or elements of different types. Thus, its first layer L1 and at least a part (MM) of its second layer L2 may be located into an equipment or element of the core network while its third layer L3 may be located into an access network (for instance into base stations (or more generally access-specific agents in charge of collecting radio and communication equipment information as well as of interacting with paging controller and radio resource management)). For instance, the first layer L1 and at least a part (MM) of the second layer L2 may be located above a mobility anchor point, which eases ubiquitous access to the services device Di offers from any access network and simplifies operations in case of mobility (no transfer of context or other cached data between network elements, such as base stations, when handovers take place). The personal-storage facilities (storing means SM of the second layer L2) may be located with the management module MM, or remotely (for instance in an application server).

The use of a device Di can be performed as mentioned hereafter.

The user requests its device Di to perform a given specific application operation or task, by means of one of his communication equipment UEij. The device Di is programmed to know how to realize the requested specific application operation or task. It is important to note that the user request may comprise additional information needed by his device Di to correctly execute the specific application operation or task.

Then the device Di takes in charge the execution of the requested application operation or task, based on its programmed logic and the possible additional information provided by the user.

In the meantime the user communication equipment UEij can enter in idle mode or can even be switched-off.

The device Di may use its storing means SM to store the temporary results coming from the execution of the requested application operation or task by the concerned application agent AAik. During this step, several (optional) events may happen:
- the user can at any time provide additional information useful for the execution of the requested application operation or task,
- the device Di may need to retrieve data or information from at least one user communication equipment UEij (for instance a file in case of back-up or file sharing). Specific choices to retrieve such data can be applied by the device Di. For instance, in case of back-up of specified files and directories of one or several communication equipments UEij belonging to the user, the device Di executes the back-up tasks during several days (potentially endlessly and/or periodically). It performs synchronization look-ups with the chosen communication equipment(s) UEij and if needed retrieves missing data (for instance a new file on a communication equipment UEij missing on the remote back-up). The strategy for executing the synchronization look-up and the data retrievals can be any one of the strategies mentioned below (or others). For instance, the device Di may synchronize (and retrieve data if needed) with a chosen communication equipment UEij only when this communication equipment UEij is active, avoiding any action when the communication equipment UEij is in idle (or switched-off) mode. As a result, the device Di keeps a back-up of user data with minimal consumption of terminal batteries (and radio resources),
- the device Di can provide one or several reports on the status of the application execution to the user. These reports can be triggered by explicit request by the user, or be automatically provided by the device Di.

Once a result of the requested application operation or task is available, the device Di applies specific choices to deliver it to the user in the most appropriate way depending on the application and/or the sate of a chosen one of his communication equipments, for instance.

It is important to note that the device Di can execute several requested operations or tasks relative to one or several applications in parallel.

When a result is available the device Di may apply specific strategies in order to determine when it will have to deliver it (downlink transfer). Some non limiting examples of possible strategies are:
- an immediate delivery (which implies immediate paging if the chosen communication equipment UEij is in idle mode),
- a postponed delivery (after a deadline),
- a delivery when the chosen communication equipment UEij is back to active mode (which does not require any paging),
- wait for an explicit request to deliver, and
- an opportunistic delivery (for instance if the chosen communication equipment UEij is in active mode then one sends to it the available data even if the execution of the application is not yet finished). For instance in a file download one sends the parts of the file already downloaded while its downloading is going on and without waiting its completion.

Similarly, if the device Di has to retrieve data from a communication equipment UEij (uplink transfer), it can apply strategies similar to the ones above described.

The choice of the strategy regarding when to deliver or retrieve can be done based on an (application dependent) pre-programmed logic or on information provided by the user (in his first request and/or in additional requests or messages) and/or by an application server.

If the device Di is executing several tasks, it may benefit of the delivery of the result of a first task to also send partial results of at least another still-executing task, or results of past-terminated tasks for which the delivery was not yet done. A similar reasoning applies to the retrieve (uplink) case.

To exit a chosen communication equipment UEij from idle mode, the device Di needs to interact with a paging controller of its communication network. For this purpose, it is possible:
- to integrate the device Di and the paging controller in a single entity or application,
- to use a specific API between the paging controller and the device Di, or
- to rely on standard paging action based on traffic delivery (the device Di sends a normal traffic packet toward the chosen communication equipment UEij which in turn triggers the paging mechanism implemented by the paging controller (which is not aware of the existence of the device Di)).

Moreover, when a result is available the device Di may apply specific strategies in order to determine how to deliver an available result or information. Some non limiting examples of possible strategies are:
- delivering a continuous flow of data,
- delivering data burst only when the chosen communication equipment UEij is in good radio conditions (which requires that the device Di knows the radio conditions of the chosen communication equipment UEij),
- applying specific quality of service (QoS) marking to the data to be delivered. As an example, in case of delivery based on IP protocol, the device Di may tag the IP packets with specific DSCP (DiffServ Code Point) codes. Some examples of type of delivery maybe: a low priority mark (or tag) for background traffic, a mid priority mark (or tag) for best effort or a high priority mark (or tag) for expedite,
- possible combination of the three above mentioned strategies.

Similarly, if the device Di has to retrieve data from a chosen communication equipment UEij (uplink transfer), it can apply strategies that are similar to the one above described.

The choice of a strategy regarding how to deliver or retrieve can be done based on (application dependent) pre-programmed logic or information provided by the user (in his first request and/or in additional requests or messages) and/or by an application server.

More, when a result is available the device Di may apply specific strategies in order to determine to which user communication equipment UEij it will have to deliver an available result. Some non limiting examples of possible strategies are:
- delivery to the communication equipment UEij which has requested the application operation or task,
- delivery to a communication equipment specified by the user (in a request or message, or previously), or
- delivery to several communication equipments specified by the user (in a request or message, or previously).

Similarly, if the device Di has to retrieve data from a communication equipment UEij (uplink transfer), it can apply strategies that are similar to the one above described. For instance, a device Di may have to retrieve data from several communication equipment when it has to maintain synchronized the data resident in several communication equipment UEij terminals of its user.

The choice of the strategy regarding to whom (or which) to deliver or retrieve can be done based on (application dependent) pre-programmed logic or information provided by the user (in his first request and/or in additional requests or messages, or even previously).

Three different typical usages of a device Di will be now described.

A first typical usage is a real-time usage such as the audio and/or video streaming. It requires that an application agent AAik hosts a streaming application (or client) and interfaces with external streaming servers, while in the same time the management module MM hides the discontinuity of the delivery to the streaming protocol (RTP/RTCP or RTSP), acting as a proxy. The delivery of the content is managed by the transfer module TM of the access module AM under control of the management module MM.

For instance, the cache storing means CMY temporary stores the streamed content until a set of smart packet schedulers (one per radio cell, controlled by the management module MM) provides optimal downlink delivery. Then the transfer module TM serves each chosen communication equipment with variable quantity of data according to criteria such as the communication equipment's maximum possible bit rate and cache storing capacity. For instance, it sends data to the chosen communication equipments at a cell capacity (if they are of wireless type). The cell capacity is for instance obtained through a Westwood-like cell bandwidth estimation, whereas information for choosing the communication equipments are deduced in the network cache from cache protocol acknowledgements and thanks to radio status report sent periodically by each communication equipment to the collection module SC of the access module AM.

For instance, the transfer module TM can be designed in order the time intervals between two consecutive bursts received by a user reach up to several tens of seconds without causing any disruption in video playing. This requires a reduction of the transferred data when a user get less good radio conditions (for instance when it is located at the edge of a radio cell) and therefore an optimization of the radio resource usage by the network.

A second typical usage is a non real-time usage such as a peer-to-peer (p2p) communication. It requires that an application agent AAik hosts a p2p application (or client) and represents the user but not only its communication equipment UEij. In this case, the application agent AAik (which acts as a virtual-client) must establish a connexion with the p2p community and manage the upload/download sessions, independently of the type and current status of its user communication equipment UEij.

This brings independency from the communication equipment UEij. So, a p2p session can be started from a communication equipment UEij, monitored from another one, and finalized (i.e. final file download) on a third one. But, in case of an intelligent integration with the smart paging and optimal uplink/downlink delivery mechanisms provided by the access module AM, this also offers several additional advantages, and notably:
- the uplink traffic through a wireless link is reduced to minimum. So, it is possible to upload once a content (in an optimal way), and then to share this content hundreds of times, without generating an automatic-seeding traffic between the user communication equipment UEij and its device Di;
- downloaded file pieces are locally stored and immediately made available to other peers, thus improving the overall efficacy of the p2p community;
- resources location signalling (and computation) is (are) limited and concealed in the network, avoiding the CPU-consuming traffic-generating operations to execute on the user communication equipment UEij.

A third typical usage is a time-constrained delivery usage. It requires that the device Di be able to manage presence information in an intelligent way, and more precisely be able to deal with the uplink delivery to the presence server of the customer presence information and the downlink delivery to its user of the presence-state updates of its buddy-list (here, "buddy" means a friend). It is recall that a presence based application (such as instant messaging (IM)) generates a lot of state-update traffic, in particular in the downlink direction. So, a user with several buddies receives a huge amount of buddy-state updates (for instance active, inactive, idle, working, sleeping).

In this case, the device Di may be requested to intelligently manage these updates to minimize the wakes up of a chosen one of its communication equipment UEij (and possibly its consequent battery drainage).

For this purpose, the device Di must take in charge the interaction with the presence server (similarly to a presence network agent). In particular, the device Di hides the idle state of its user communication equipment UEij by, for instance, directly responding to keep-alive solicitations coming from the presence server. So, watchers having subscribed to the user presence information see the user as active (and ready to communicate, for instance), even when its communication equipment UEij is in idle mode.

When the device Di acts as a watcher, it updates the buddy list of its user (preferably within a maximum delay which does not exceed 60 seconds), even when its user's communication equipment is in idle mode. For instance, while its user watches a chosen movie in the train by means of his PDA (which is therefore in idle mode), he may also be interested to be notified when a chosen one of his friends becomes available in order to start a chat communication with him.

To satisfy watcher expectations and minimize battery consumption of the user communication equipment UEij, the device Di provides an optimized time-constrained delivery. Instead of waking-up the communication equipment UEij at each buddy list update arrival, it may temporary store these updates in a local memory (for instance the cache storing memory CMY). Then, when the maximum delay budget of a received update approaches its expiration time, the device Di may wake up its user communication equipment UEij and may deliver all the received updates (and any other information to be delivered) into a single burst.

The invention can also be considered in terms of a method intended for managing execution of at least one application of a user having at least one communication equipment UEij connectable to a communication network.

Such a method may be implemented by means of a device Di such as the one above described with reference to figure 2. Therefore, only its main characteristics will be mentioned hereafter.

The method according to the invention consists:
i) in hosting a chosen application of a user into the communication network,
ii) in executing this chosen application to get results, based on task information and possibly according to information and/or application results retrieved near or received from chosen application(s) and/or chosen communication equipment(s), and while hiding the current state of each communication equipment UEij of the user to other applications and communication equipments for allowing them to collaborate with this user application whatever the current state(s), and
iii) in delivering information and/or results of this executed application to chosen application(s) and/or chosen communication equipment(s) at chosen instants.

The invention is not limited to the embodiments of method and device described above, only as examples, but it encompasses all alternative embodiments which may be considered by one skilled in the art within the scope of the claims hereafter.

## Claims

1. Device (Di) for managing execution of at least one application of at least one user having at least one communication equipment (UEij) connectable to a communication network, **characterized in that** it comprises i) at least one application agent (AAik) arranged for hosting and executing at least one chosen application of a user, and for delivering results of said application execution, ii) an access means (AM) arranged for retrieving, receiving or delivering information and/or application results near, from or to other chosen application(s) and/or chosen communication equipment(s), and iii) a managing means (MM) arranged for providing task information relative to said application execution and/or retrieved or received information and/or results to said application agent(s) (AAik), for hiding the current state of each communication equipment (UEij) of said user to other applications and communication equipments for allowing them to collaborate with said user application whatever said current state(s), and for triggering said retrieve and delivery by said access means (AM) at chosen instants.

2. Device according to claim 1, **characterized in that** said access means (AM) is arranged for collecting information representative of said current state of at least one communication equipment (UEij) of said user and/or triggering wake-up events of a chosen communication equipment (UEij) of said user.

3. Device according to one of claims 1 and 2, **characterized in that** said access means (AM) is arranged for collecting information representative of radio conditions for a chosen wireless communication equipment (UEij) of said user and/or for collecting information representative of a current cache storing capacity of a chosen communication equipment (UEij) of said user.

4. Device according to claim 3, **characterized in that** said managing means (MM) is arranged for triggering said retrieve and delivery by said access means (AM) at chosen instants according to said collected radio condition information and/or cache storing capacity information.

5. Device according to one of claims 1 to 4, **characterized in that** it comprises a storing means (SM) arranged for storing files each comprising either a content coming from a communication equipment (UEij) of said user or a result of an application execution by said application agent (AAik).

6. Device according to claim 5, **characterized in that** said storing means (SM) is arranged for storing at least one of said files in correspondence with an indication on its optimal delivery by said access means (AM).

7. Device according to one of claims 1 to 6, **characterized in that** it comprises a checking means (CM) arranged for checking integrity and/or legality and/or safeness of said information and/or results to be delivered.

8. Method for managing execution of at least one application of a user having at least one communication equipment (UEij) connectable to a communication network, **characterized in that** it consists i) in hosting a chosen application of a user into said communication network, ii) in executing said chosen application to get results, based on task information and possibly according to information and/or application results retrieved near or received from other chosen application(s) and/or chosen communication equipment(s), and while hiding the current state of each communication equipment (UEij) of said user to other applications and communication equipments for allowing them to collaborate with said user application whatever said current state(s), and iii) in delivering information and/or results of said executed application to other chosen application(s) and/or chosen communication equipment(s) at chosen instants.

9. Method according to claim 8, **characterized in that** in ii) one collects information representative of said current state of at least one communication equipment (UEij) of said user and/or in ii) and/or iii) one triggers wake-up events of a chosen communication equipment (UEij) of said user.

10. Method according to one of claims 8 and 9, **characterized in that** in ii) one collects information representative of radio conditions for a chosen wireless communication equipment (UEij) of said user and/or information representative of a current cache storing capacity of a chosen communication equipment (UEij) of said user, in order to choose said instants for retrieving and delivering information and/or application results.

11. Method according to one of claims 8 to 10, **characterized in that** in ii) one stores files comprising either a content coming from a communication equipment (UEij) of said user or a result of an executed application.

12. Method according to claim 11, **characterized in that** one stores at least one of said files in correspondence with an indication on its optimal delivery.

13. Method according to one of claims 8 to 12, **characterized in that** in iii) one checks integrity and/or legality and/or safeness of said information and/or results to be delivered.
